# EUROPEAN PATENT APPLICATION

(11) **EP 4 435 398 A1**
(43) Date of publication of application: **25.09.2024**
(21) Application number: 24164320.4
(22) Date of filing: 18.03.2024
(51) Int. Cl.: G01M 1/04, G01M 1/16, G01M 1/32, G01M 99/00, H02K 15/16

(54) **ROTATIONAL CONTROL DEVICE FOR SPIN TEST**

(30) Priority: 21.03.2023 IT 202300005283
(71) Applicant: Balance Systems S.r.L., 20145 Milano (IT)
(72) Inventor: TRIONFETTI, Mr. Gianni, 20041 AGRATE BRIANZA (Monza Brianza) (IT)
(74) Representative: Lunati & Mazzoni S.r.L.

(57) **Abstract**

A rotational control device (1) for spin test is provided comprising a supporting frame (2); a body (3) suitable to be coupled with an external rotor (10) and connected to the frame (2); constraint means (4) configured to constrain unstably the frame (2) and the body (3) so as to define a rotation axis (2a) around which the body (3) rotates with respect to the frame (2) and including at least a rolling bearing (40) centered with respect to the rotation axis (2a) and connected to the body (3) so as to surround the body (3), an annular stator (41) centered with respect to the rotation axis (2a), connected between bearing (40) and frame (2) so as to surround the bearing (40) and including a first stiff annular portion (41a) connected to the bearing (40), a second stiff annular portion (41b) connected to the frame (2), wherein the portions (41a, 41b) are mutually distinct and separate, and the stator (41) further includes a deformable annular connector (41c) through which the portions (41a, 41b) are mutually constrained to allow relative motions between the portions (41a, 41b) even in a plane normal to the rotation axis (2a).

## Description

The present invention relates to a rotational control device for spin test of the type specified in the preamble of the first claim.

In particular, the present invention relates to a rotational control device suitable to be used inside a plant for spin test on unbalanced rotors.

Similar devices are described in the patent applications CN-A-112629, US-A-2751262, US-A-2021/379728 and US-A-3146632.

As it is known, the spin test is a test carried out during the productive cycle of a rotor for electric motors, for example for the car traction, and substantially consists in bringing the rotor of the electric motor at a much higher speed than the nominal one, for example by bringing it up to 20,000 revolutions per minute, in order to guarantee to carry out at least two main functions, that is guaranteeing the mechanical seal of the rotor, especially in case some mechanical components is defective with also the possibility of bringing the rotor to explode during the test, and to compact by centrifugal force all pieces constituting the rotor so as to make the whole more stabilized.

Since this test is carried out in a phase preceding the balancing one, the rotor under test can be unbalanced.

This unbalance generates, at 20000 revolutions per minute, immense forces which tend to damage any bearing and to increase intolerably both the noise and the possibility of occurring mechanical resonances on the supporting structure.

In order to obviate the above-mentioned drawbacks, the current spin test producers implement machines with stiff and very heavy mechanical structures, sometimes uncomfortable for manipulating the object under test. On the contrary, such machines can allow the cantilever motor constraint, for greater speed and ergonomics of assembly and disassembly, and such configuration causes a greater instability.

However, the shape of such machines causes the generation of enormous and intolerable noises and vibrations, during the test.

In fact, usually, the machines of known art force the spin tests to be carried out only on pieces previously subjected to a balancing phase.

Moreover, such pieces, in any case, have to be subsequently balanced again considering that a high percentage of pieces unbalances after spin test.

In this situation the technical task underlying the present invention is to devise a rotational control device for spin test capable of substantially obviating at least partially the mentioned drawbacks.

Within said technical task an important object of the invention is to obtain a rotational control device for spin test which allows to carry out tests on unbalanced rotors.

Another important object of the invention is to implement a rotational control device for spin test allowing to reduce considerably the noise and the vibrations deriving from the same test, with consequent decrease in the possibility of damaging the components of the device or of the overall plant.

In conclusion, an additional task of the invention is to implement a rotational control device for spin test which is structurally simple and cheap.

The technical task and the specified objects are achieved by a rotational control device for spin test as claimed in the enclosed claim 1.

Preferred technical solutions are highlighted in the depending claims.

The features and the advantages of the invention are explained hereinafter by the detailed description of preferred embodiments of the invention, with reference to the enclosed drawings, wherein:

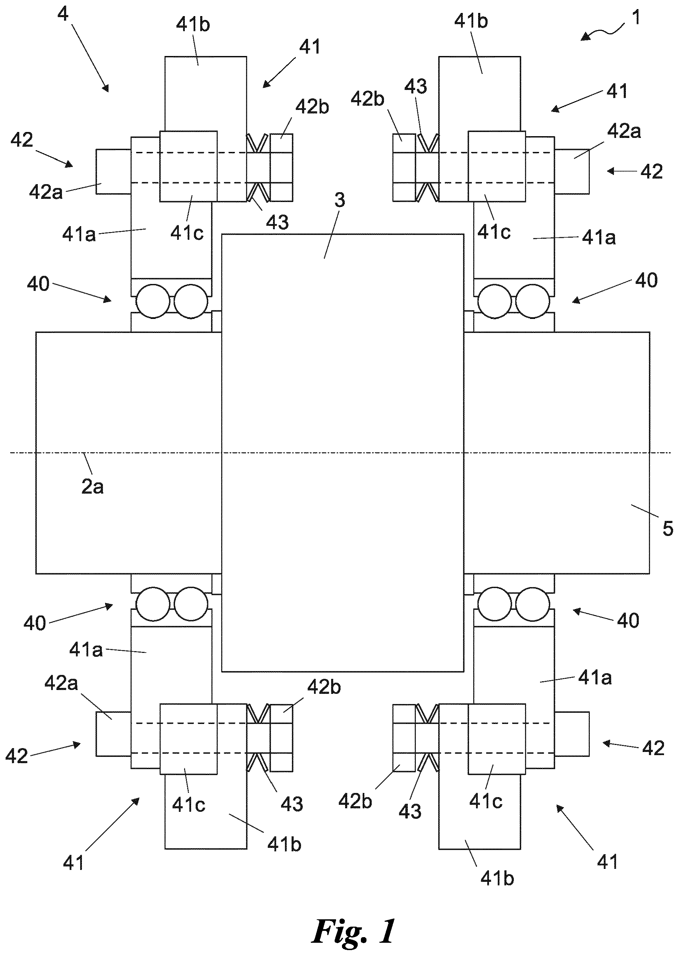

**Figure 1** shows a longitudinal view of a rotational control device for spin test according to the invention; and

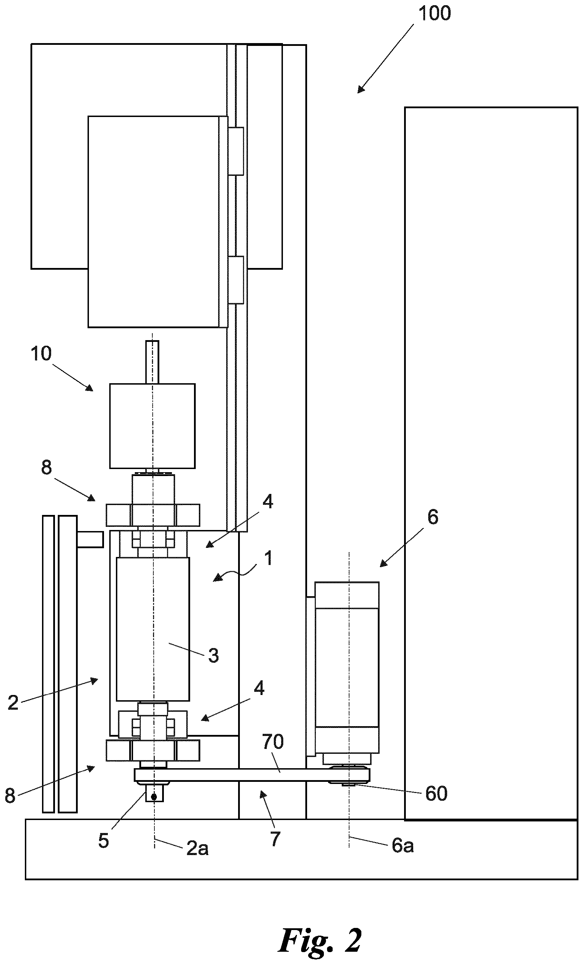

**Figure 2** illustrates a simplified scheme of a plant for spin test including a rotational control device for spin test according to the invention.

In the present document, the measurements, values, shapes and geometrical references (such as perpendicularity and parallelism), when associated to words such as "about" or other similar terms such as "approximately" or "substantially", are to be meant as excluding measurement errors or inaccuracies due to production and/or manufacturing errors and, above all, excluding a slight deviation from the value, measurement, shape or geometrical reference thereto it is associated. For example, such terms, if associated to a value, preferably designate a deviation not higher than 10% of the value itself.

Moreover, when used, terms such as "first", "second", "higher", "lower", "main" and "secondary" do not identify necessarily an order, a relation priority or relative position, but they can be simply used to distinguish more clearly components different from each other.

Unless otherwise specified, as it results from the following discussions, it is considered that terms such as "treatment", "computer science", "determination", "calculation", or the like, relate to the action and/or processes of a computer or similar electronic calculation device which manipulates and/or transforms data represented as physical data, such as electronic quantities of registers of a computer system and/or memories into other data similarly represented as physical quantities within computer systems, registers or other devices for storing, transmitting or displaying information.

The measurements and data reported in the present text are to be considered, unless otherwise indicated, as performed under International Standard Atmosphere ICAO (ISO 2533:1975).

With reference to the Figures, the rotational control device for spin test according to the invention is designated as a whole with number **1.**

The device 1 is preferably part of a plant **100** for spin test.

The plant 100, then, is an apparatus or machine which allows to implement rotational tests on a particular rotary. The latter, then, is denominated rotor **10.** The rotor 10 can be, for example, a rotor for electric motors, such as those for the car traction.

The spin test substantially consists in bringing the rotor 10 at a much higher speed than the nominal one, for example at speeds preferably higher than 10000 revolutions per minute, even equal to or higher than 20000 revolutions per minute. The device 1, then, is the component of the plant 100 substantially suitable to allow the rotation control of the rotor 10.

Still more in detail, the device 1 is suitable to allow to manage the vibrations generated during the rotation of the rotor 10 mainly due to unbalances which appear especially at very high rotation speeds.

The device 1, in short, comprises a frame **2.**

The frame 2 is substantially a supporting frame. Therefore, it is suitable to sustain the different components of the device 1. Moreover, the frame 2, can be suitable to support all, or at least partially, the components, of the plant 100.

The frame 2 then can be integral to a ground. In this sense, the frame 2 can be rested onto the ground, or be raised with respect to the ground, for example resting onto a plane.

The ground, of course, can be ground, pavement or any other, preferably flat, surface, which could allow to rest stably the frame 2.

The device 1, then, comprises also a body **3.**

The body 3 is preferably connected to the frame 2. Still more in detail, the body 3 is connected to the frame 2 so as to be able to rotate, with respect thereto, around a rotation axis **2a.**

The rotation axis 2a, for example, can correspond to a central or barycentric axis of the body 3. The latter, then, can behave like an inertial mass for the device 1. Moreover, the body 3 is suitable to be coupled with the rotor 10. The rotor 10, as already said, is on itself external to the device 1, but it can be coupled to it inside the plant 100.

In particular, inside the plant 100, the rotor 10 can be centered with respect to the rotation axis 2a. Then, the rotor 10 can be integral and adjacent to the body 3 along the rotation axis 2a.

In order to implement the constraint between rotor 10 and body 3, preferably the body 3 comprises a radial spindle or pliers developing around the rotation axis 2a. Therefore, the rotor 10 ca be resolvably constrained to the body 3.

Preferably and advantageously, the body 3 defines its own greater inertial mass with respect to the inertial mass of the rotor 10. In this way, the body 3 acts already, on itself, as dampener with respect to its own ways of vibration of the rotor 10 rotating around the rotation axis 2a.

In order to implement the constraint between body 3 and frame 2, preferably the device 1 comprises constraint means **4.**

The constraint means 4, indeed, is configured to constrain unstably the frame 2 and said body 3 so as to define the rotation axis 2a around which the body 3 rotates with respect to the frame 2.

The constraint means 4, then, includes, at least a bearing **40** and a stator **41.**

The bearing 40 is substantially a rolling bearing. Therefore, as it is known, it consists of two concentric portions mutually interconnected through motion means such as cylinders or small spheres.

The bearing 40 is preferably centered with respect to the rotation axis 2a. Moreover, the bearing 40 is connected to the body 3 so as to surround it.

The stator 41, then, is an annular element. Moreover, the stator 41 is centered with respect to the rotation axis 2a. Then, the stator 41 is connected between bearing 40 and frame 2 so as to surround the bearing 40.

Then, the stator 41 is substantially a static connecting element between frame 2 and bearing 40.

The stator 41, moreover, includes several portions. In particular, the stator 41 includes a first portion **41a** and a second portion **41b.**

The first portion 41a is annular; moreover, it is stiff. In particular, the first portion 41a is connected to the bearing 40.

The second portion 41b too is annular, even if not necessarily circus symmetrical; moreover, it is stiff too. In particular, the second portion 41b is connected to the frame 2.

Advantageously, the portions 41a and 41b are mutually distinct.

Then, still advantageously, the stator 41 further comprises a connector **41c.**

The connector 41c too is annular; moreover, differently from the portions 41a, 41b, the connector 41c is deformable. In particular, preferably, the connector 41c includes, or consists of, polymeric and more preferably elastomeric material such as, for example, rubber, or an elastic spring or more.

In particular, the connector 41c is the element through which the portions 41a, 41b are mutually constrained. Then, it is substantially interposed between the portions 41a, 41b.

Moreover, the connector 41c allows to constraint the portions 41a, 41b so as to allow related motions between portions 41a, 41b even in a plane normal to the rotation axis 2a.

This means that the connector 41c behaves like a discharge for the vibratory motions imposed on the body 3 inside the normal plane. Then, if the device 1 is part of a plant 100 and the rotor 10 is integral to the body 3, the connector 41c absorbs the vibrations of the rotor 10 and avoids that such vibrations could impact on the overall structure of the device 1 by causing ruptures or other drawbacks. Moreover, the constraint means 4 comprising the deformable connector 41c is statoric since assembled downstream of the bearings 40, this increases the static dampening with respect the rotating dampening in order to increase the system stability.

The constraint means 4, moreover, can comprise additional elements.

For example, the constraint means 4 can further comprise at least a bolt 42. If present, the bolt 42 is a clamping bolt and comprises preferably, as it is known, a screw **42a** and a nut **42b;** moreover, it is configured to mutually constrain the portions 41a, 41b. Then, the bolt 42 develops along a development axis **42a.** The development axis 42a is preferably parallel to the rotation axis 2a. Preferably, additionally, the development axis 42a passes through the connector 41c.

The bolt 42 then allows to implement a kind of sandwich-like structure, whose layers are formed, in the order, by first portion 41a, connector 41c and second portion 41b. The constraint means 4 can also comprise an opposition element **43.**

If present, the opposition element 43 is suitable to interact with the bolt 42. Then, the opposition element 43 is preferably elastic. On this regard, it can comprise a simple linear spring, developing along the development axis 42, or an elastomeric element, for example made of rubber.

The opposition element 43, then, is interposed between part of the bolt 42 and one of the portions 41a, 41b. Moreover, the opposition element 43 is preferably configured to exert a clamping tension on the portions 41a, 41b proportional to the compression of the opposition element 43.

Still more in detail, preferably, the opposition element 43 is interposed between the head 42a and one to be selected from the portions 41a, 41b. In this way, it is easier to replace the opposition element 43 in case of ruptures or abrasions due to wear. Of course, the constraint means 4 can even comprise a plurality of bolts 42. In the preferred, but not exclusive, embodiment, in fact, the constraint means 4 comprises a plurality of bolts 42 distributed radially around the rotation axis 2a on the stator 41. Moreover, the constraint means 4 can comprise a pair of bearings 40 and a pair of stators 41. Then, each bearing 40 and each stator 41 of the pair can be arranged respectively at the sides of the body 3 mutually opposite and spaced apart along the rotation axis 2a.

In this way, the constraint means 4 implements a double constraint on the body 3 which acts at the opposite ends of the body 3 itself.

If the device 1 is comprised inside a plant 100, the latter can further comprise a first shaft **5.**

The first shaft 5 is preferably centered with respect to the rotation axis 2a. Moreover, the first shaft 5 is integral and adjacent to the body 3 along the rotation axis 2a. In this sense, the first shaft 5 can indeed be part of the body 3, or can be an extension of the body 3 or can be constrained to the body 3 so as to drag it and impose on it a rotation.

Moreover, the first shaft 5 is preferably arranged at one side of the body 3 opposite to the rotor 10.

Then, the plant 100 can further comprise a motor **6.**

The motor 6 substantially is the component of the plant 100 suitable to put in rotation the body 3 and, then, even the rotor 10 for carrying out the spin test.

Then, the motor 6 can be of any type, and preferably it is of electric type.

In any case, preferably, the motor 6 comprises at least a second shaft **60.**

The second shaft 60 is the portion of motor 6 suitable to allow the direct transmission of the motion. Therefore, the second shaft 60 is rotating around its own traction axis **6a.**

The traction axis 6a is substantially the axis around which the second shaft 60 rotates to provide the adequate traction to put in rotation at least the body 3 and the rotor 10.

The plant 100 preferably also comprises transmission means **7.**

If present, the transmission means 7 is configured to transmit the motion of the second shaft 60 to the first shaft 5. Then, the transmission means 7 can even comprise a connector suitable to connect first shaft 5 and second shaft 6.

In a preferred embodiment of the plant 100, the rotation axis 2a and the traction axis 6a are mutually misaligned. Moreover, preferably they are parallel. Then, the transmission means 7 for example can comprise, or consist of, a belt 70 wound between first shaft 5 and second shaft 60.

The device 1, additionally to what described, can comprise additional elements. For example, the device 1 can further comprise a balancer **8.**

The balancer 8 is preferably of rotative type. Therefore, the balancer 8, on itself, is a known apparatus suitable to allow to detect possible rotational unbalances of the body 3 and to implement a balancing of such unbalances.

Then, the balancer 8 is preferably centered with respect to the rotation axis 2a. Moreover, the balancer 8 is integral to the body 3. Preferably, the balancer 8 is arranged adjacently to the constraint means 4.

Therefore, the device 1 can comprise a pair of balancers 8.

The balancers 8, in fact, can be arranged at the sides of the body 3 mutually opposite. In this way, the balancers 8 can balance the body 3 on both ends of the same body 3.

The device 1 can also comprise particular advantageous features.

For example, the frame 2 can be integral to the ground and the rotation axis 2a can be perpendicular to the ground itself.

Moreover, advantageously, the rotor 10 can be positioned below the device 1 with respect to the ground. In this way, should situations arise in which the rotor 10 detaches from the body 3, the rotor 10 could be thrown towards the ground by avoiding to hit portions of device 1 or plant 100.

The operation of the previously described rotational control device 1 for spin test in structural terms is the following.

Substantially, the rotor 10 can be connected to the body 3 which acts as inertial mass. Then, the body 3 vibrates integrally to the rotor 10 and transmits the vibrations to the constraint means 4 by discharging them, in detail, on the the stator 41, that is on the static portion of the constraint means 4, through the connector 41c.

The invention, moreover, comprises a new process for carrying out spin test.

The process is substantially implemented by a plant 100.

The plant 100, then, includes a device 1 preferably equipped with at least a balancer 8.

Then, the process comprises at least a first rotation phase. In the first rotation phase, substantially, the body 3 is made to rotate so as to rotate the rotor 10 until a maximum of 10000 revolutions per minute. The rotation can be implemented, of course, by actuating the motor 6 and by transferring the rotation of the second shaft 60 to the first shaft 5 so as to rotate the body 3 and, at the same time, the rotor 10. The process, moreover, comprises also an actuation phase.

The actuation phase is preferably subsequent to the first rotation phase. The actuation phase comprises the fact of actuating the balancer 8 in order to balance the rotor 10. In this phase, then, possible unbalances are rebalanced to prepare the rotor 10 for an additional phase.

In fact, preferably, the process further comprises a phase of second rotation. In this latter phase, preferably, the body 3 is rotated so as to rotate the rotor 10 over 10000 revolutions per minute, for example even up to 20000 revolutions per minute.

The second rotation, in detail, can be implemented like the first rotation.

The process, advantageously, comprises even an additional actuation phase.

Preferably, the latter phase is implemented before the first rotation of the body 3.

Moreover, it still comprises the actuation of the balancer 8 in order to balance the rotor 10.

In other words, the process allows to implement two balancing steps.

The rotational control device 1 for spin test according to the invention achieves important advantages.

In fact, the rotational control device 1 for spin test allows to carry out tests on unbalanced rotors.

Moreover, the rotational control device 1 for spin test allows to reduce considerably the noise and the vibrations deriving from the test itself, with consequent decrease in the possibility of damaging the components of the device or of the overall plant. In particular, such advantage is due to the constraint means 4, comprising the deformable connector 41c, which improve the system stability, even if the rotor 10 is cantilevered assembled.

Additionally, the described constraint means 4 reduces the extent of the force which the unbalance would exchange with the statoric portion.

In conclusion, the rotational control device 1 for spin test is structurally simple and cheap.

The invention may be subject to variants within the scope of the inventive concept defined by the claims.

Within such scope, all details can be replaced by equivalent elements and the materials, shapes and sizes can be any.

## Claims

1. A rotational control device (1) for spin test comprising:
- a supporting frame (2);
- a body (3) suitable to be coupled with an external rotor (10) connected to said frame (2);
- constraint means (4) configured to constrain unstably said frame (2) and said body (3) so as to define a rotation axis (2a) around which said body (3) rotates with respect to said frame (2) and including at least:
- a rolling bearing (40) centered with respect to said rotation axis (2a) and connected to said body (3) so as to surround said body (3),
- an annular stator (41) centered with respect to said rotation axis (2a), connected between said bearing (40) and said frame (2) so as to surround said bearing (40) and including:
- a first stiff annular portion (41a) connected to said bearing (40),
- a second stiff annular portion (41b) connected to said frame (2), distinct and separate from said first portion (41a), and
- deformable annular connector (41c) through which said portions (41a, 41b) are mutually constrained to allow relative motions between said portions (41a, 41b) even in a plane normal to said rotation axis (2a),
and **characterized in that**
- said connector (41c) includes elastomeric material.

2. The device (1) according to any one of the preceding claims, wherein said constraint means (4) further comprises at least a clamping bolt (42) configured to mutually constrain said portions (41a, 41b) and developing along a development axis (42a) parallel to said rotation axis (2a) and passing through said connector (41c).

3. The device (1) according to the preceding claim, wherein said constraint means (4) further comprises an elastic opposition element (43) interposed between part of said bolt (42) and one of said portions (41a, 41b) and configured to exert a clamping tension on said portions (41a, 4b) proportional to the compression of said opposition element (43).

4. The device (1) according to the preceding claim, wherein said bolt (42) comprises a screw (42a) and a nut (42b) and said opposition element (43) is interposed between said head (42a) and one to be selected from said portions (41a, 41b).

5. The device (1) according to any one of claims 2-4, wherein said constraint means (4) comprises a plurality of bolts (42) distributed radially around said rotation axis (2a) on said stator (41).

6. The device (1) according to any one of the preceding claims, wherein said constraint means (4) comprises at least a pair of bearings (40) and of stators (41) respectively arranged at sides of said body (3) mutually opposite and spaced apart along said rotation axis (2a).

7. The device (1) according to any one of the preceding claims, further comprising at least a rotative balancer (8) centered with respect to said rotation axis (2a), integral to said body (3) and arranged adjacent to said constraint means (4).

8. The device (1) according to any one of the preceding claims, wherein said frame (2) is integral to a ground and said rotation axis (2a) is perpendicular to said ground.

9. The device (1) according to the preceding claim, wherein said rotor (10) is positioned below said device (1) with respect to said ground.

10. The plant (100) for spin test including a device (1) according to any one of the preceding claims, and said rotor (10) centered with respect to said rotation axis (2a) and integral and adjacent to said body (3) along said rotation axis (2a).

11. The plant (100) according to the preceding claim, wherein said body (3) defines its own greater inertial mass with respect to the inertial mass of said rotor (10).

12. The plant (100) according to any one of claims 10-11, comprising:
- a first shaft (5) centered with respect to said rotation axis (2a) and integral and adjacent to said body (3) along said rotation axis (2a) at a side of said body (3) opposite to said rotor (10),
- a motor (6) including a second shaft (60) rotating around its own traction axis (6a), and
- transmission means (7) configured to transmit the motion of said second shaft (60) to said first shaft (5).

13. The plant (100) according to the preceding claim, wherein said rotation axis (2a) and said traction axis (6a) are mutually misaligned and parallel and the transmission means (7) comprises a belt (70) wound between said first shaft (5) and said second shaft (60).

14. The process for carrying out the spin test implemented by a plant (100) according to any one of claims 11-13 including a device (1) according to at least claim 7, comprising the fact of:
- rotating for the first time said body (3) so as to rotate said rotor (10) up to a maximum of 10000 revolutions per minute;
- actuating said balancer (8) in order to balance said rotor (10) after said first rotation of said body (3);
- rotating a second time said body (3) so as to rotate said rotor (10) over 10000 revolutions per minute;
and **characterized in that** it further comprises the fact of
- actuating said balancer (8) in order to balance said rotor (10) before said first rotation of said body (3).
